(19) Europäisches Patentamt
European Patent Office
Office européen des brevets

(11) **EP 1 835 109 A2**

(12) **EUROPÄISCHE PATENTANMELDUNG**

(43) Veröffentlichungstag:
**19.09.2007 Patentblatt 2007/38**

(51) Int Cl.:
*E05F 1/10* (2006.01)   *E05F 5/00* (2006.01)
*E05F 15/12* (2006.01)

(21) Anmeldenummer: **06024466.2**

(22) Anmeldetag: **24.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **14.03.2006 GB 0605008**

(71) Anmelder: **Delphi Technologies, Inc.**
**Troy, Michigan 48007 (US)**

(72) Erfinder: **Büscher, Hans-Joachim**
**40477 Düsseldorf (DE)**

(74) Vertreter: **Manitz, Finsterwald & Partner GbR**
**Postfach 31 02 20**
**80102 München (DE)**

(54) **Ausgleicheinrichtung für eine um eine Achse schwenkbare Verschliesseinrichtung einer Heckklappe**

(57)    Anordnung, insbesondere für ein Kraftfahrzeug, mit einer zwischen einer geschlossenen und einer geöffneten Stellung um eine Achse (11) schwenkbaren Verschließeinrichtung (13), beispielsweise einem Kofferraumdeckel oder einer Heckklappe, einer auf die Verschließeinrichtung wirkenden Ausgleichseinrichtung (15), insbesondere wenigstens einer Gasdruckfeder (15), welche vorgespannt ist und der Gewichtskraft ($F_G$) der Verschließeinrichtung eine Gegenkraft ($F_F$) entgegensetzt, und einem motorgetriebenen, zumindest unidirektional, insbesondere bidirektional betreibbaren Antrieb, um die Verschließeinrichtung in wenigstens einer Richtung um die Achse zu schwenken, wobei der motorgetriebene Antrieb rücktreibbar ausgebildet ist, um eine manuelle Betätigung der Verschließeinrichtung zu ermöglichen. Es sind Reibmittel vorgesehen, die sowohl bei manueller Betätigung der Verschließeinrichtung als auch bei Betätigung durch den Antrieb mit einem vorgegebenen Reibmoment auf die Verschließeinrichtung wirken, wobei das Reibmoment innerhalb des Schwenkbereichs der Verschließeinrichtung oder eines Teilbereichs hiervon größer ist als der Betrag der Differenz aus einem durch die Gewichtskraft der Verschließeinrichtung erzeugten ersten Drehmoment ($M_G$) und einem durch die Gegenkraft der Ausgleichseinrichtung erzeugten zweiten Drehmoment ($M_F$).

**Fig. 1**

a)

b)

EP 1 835 109 A2

**Beschreibung**

Die vorliegende Erfindung betrifft eine Anordnung, insbesondere für ein Kraftfahrzeug, mit einer zwischen einer geschlossenen und einer geöffneten Stellung um eine Achse schwenkbaren Verschließeinrichtung, beispielsweise einem Kofferraumdeckel oder einer Heckklappe, einer auf die Verschließeinrichtung wirkenden Ausgleichseinrichtung, insbesondere wenigstens einer Gasdruckfeder, welche vorgespannt ist und der Gewichtskraft der Verschließeinrichtung eine Gegenkraft entgegensetzt, und einem motorgetriebenen, zumindest unidirektional, insbesondere bidirektional betreibbaren Antrieb, um die Verschließeinrichtung in wenigstens einer Richtung um die Achse zu schwenken, wobei der motorgetriebene Antrieb rücktreibbar ausgebildet ist, um eine manuelle Betätigung der Verschließeinrichtung zu ermöglichen.

Es sind beispielsweise Heckklappen bekannt, die mittels eines motorgetriebenen, unidirektional antreibbaren Antriebs geschlossen und mittels Gasdruckfedern geöffnet werden können. Um das Öffnen einer derartigen Heckklappe durch die Gasdruckfedern zu ermöglichen, ist der Antrieb rücktreibbar ausgebildet. Bei einer derartigen Anordnung ist es jedoch nicht möglich, die Heckklappe in einer Drehposition festzuhalten, welche zwischen der vollständig geöffneten und der vollständig geschlossenen Stellung der Heckklappe liegt. Vielmehr wird die Heckklappe bei abgeschaltetem Antrieb aufgrund der durch die Gasdruckfedern ausgeübten Kraft aus einer Zwischenposition immer in die vollständig geöffnete Position gedrängt.

Um ein Festhalten der Heckklappe in einer Zwischenposition zu ermöglichen, werden Antriebe eingesetzt, welche nicht rücktreibbar sind. Um weiterhin das manuelle Öffnen der Heckklappe mittels der Gasdruckfedern zu ermöglichen, muss die Heckklappe dann aber von dem nicht rücktreibbaren Antrieb entkoppelt werden. Hierzu wird eine Schaltkupplung vorgesehen, welche jedoch zusätzlichen Aufwand und Kosten verursacht.

Daneben sind auch bidirektional betreibbare Antriebe bekannt, wobei auch hier eine Schaltkupplung notwendig ist, um einerseits ein Festhalten der Heckklappe in einer Zwischenposition und andererseits eine manuelle Betätigung der Heckklappe durch einen Benutzer, beispielsweise bei einem Defekt des Antriebs oder einem Ausfall der Stromversorgung des Antriebs, zu ermöglichen.

Der Erfindung liegt die Aufgabe zugrunde, eine Anordnung der eingangs genannten Art zu schaffen, welche sowohl ein Festhalten der Verschließeinrichtung in einer Zwischenposition als auch eine manuelle Betätigung der Verschließeinrichtung ermöglicht und dabei ohne eine Schaltkupplung auskommt.

Diese Aufgabe wird durch eine Anordnung mit den Merkmalen des Anspruchs 1 gelöst, und insbesondere dadurch, dass Reibmittel vorgesehen sind, die sowohl bei manueller Betätigung der Verschließeinrichtung als auch bei Betätigung durch den Antrieb mit einem vorgegebenen Reibmoment auf die Verschließeinrichtung wirken, wobei das Reibmoment innerhalb des Schwenkbereichs der Verschließeinrichtung oder eines Teilbereichs hiervon größer ist als der Betrag der Differenz aus einem durch die Gewichtskraft der Verschließeinrichtung erzeugten ersten Drehmoment und einem durch die Gegenkraft der Ausgleichseinrichtung erzeugten zweiten Drehmoment.

Die Gewichtskraft der Verschließeinrichtung erzeugt ein erstes Drehmoment, um die Verschließeinrichtung in eine erste Drehrichtung zu schwenken. Die Gegenkraft der Ausgleichseinrichtung, beispielsweise wenigstens eine Druckfeder, insbesondere wenigstens eine Gasdruckfeder, erzeugt ein zweites Drehmoment, um die Verschließeinrichtung in die der ersten Drehrichtung entgegengesetzte Drehrichtung zu schwenken. Dabei kann das erste Drehmoment größer sein als das zweite Drehmoment, oder umgekehrt. Der Betrag der Differenz der beiden einander entgegengesetzt gerichteten Drehmomente ergibt ein resultierendes Drehmoment, welches kleiner ist als das Reibmoment der Reibmittel.

Unter dem ersten Drehmoment, dem zweiten Drehmoment und dem Reibmoment im Sinne der Erfindung ist jeweils der Betrag des jeweiligen Moments zu verstehen. Das Reibmoment kann durch die Wahl der Reibmittel oder durch Reibmittel, bei welchen das Reibmoment einstellbar ist, vorgegeben werden.

Das Reibmoment wirkt dem resultierenden Drehmoment immer entgegen, unabhängig davon, welches der beiden entgegengesetzt gerichteten Drehmomente größer ist. Hierdurch wird ermöglicht, die Verschließeinrichtung in einer beliebigen Zwischenposition des Schwenkbereichs der Verschließeinrichtung festzuhalten. Ist das Reibmoment nicht in allen Drehpositionen der Verschließeinrichtung innerhalb des Schwenkbereichs größer als das resultierende Drehmoment, sondern nur in einem Teilbereich hiervon, kann die Verschließeinrichtung zumindest in dem Teilbereich festgehalten werden. Die Haltefunktion, die im Stand der Technik durch einen nicht rücktreibbaren Antrieb gewährleistet ist, wird hier von den das Reibmoment ausübenden Reibmitteln übernommen.

Deshalb ist es auch möglich, den motorgetriebenen Antrieb rücktreibbar auszubilden, wodurch wiederum eine manuelle Betätigung der Verschließeinrichtung durch einen Benutzer, beispielsweise durch den Fahrer, ermöglicht wird, ohne dass eine Schaltkupplung vorgesehen werden muss, so dass Kosten eingespart werden können. Bei den Reibmitteln handelt es sich nicht um eine Kupplung, da das Reibmoment auch bei Betätigung der Verschließeinrichtung durch den Antrieb auf die Verschließeinrichtung wirkt. Insbesondere entspricht das bei manueller Betätigung wirkende Reibmoment dem bei Betätigung durch den Antrieb wirkenden Reibmoment.

Bei der Gewichtskraft der Verschließeinrichtung kann es sich um die Kraft handeln, die durch die Masse der Verschließeinrichtung allein verursacht wird. Insbesondere ist unter der Gewichtskraft der Verschließeinrichtung aber auch die Kraft zu verstehen, die durch die Masse der Verschließeinrichtung inklusive einer hierzu zu addierenden Toleranz, beispielsweise für auf der Verschließeinrichtung befindlichen Schnee, verursacht wird.

Bevorzugt sind zumindest bei einer mittleren Betriebstemperatur der Ausgleichseinrichtung die entgegengesetzt gerichteten Drehmomente im Wesentlichen gleich groß. Hierdurch ist bei bidirektional betreibbaren Antrieben das Drehmoment, das von dem motorgetriebenen Antrieb oder von einem Benutzer manuell aufgewandt werden muss, um die Verschließeinrichtung um die Achse zu schwenken, für beide Drehrichtungen gleich gering, da jeweils im Wesentlichen nur noch das Reibmoment überwunden werden muss. Bei unterschiedlich großen Drehmomenten ist das von dem Antrieb oder manuell aufzuwendende Drehmoment in einer der beiden Drehrichtungen dann zwar kleiner als das Reibmoment, in der anderen der beiden Drehrichtungen jedoch größer als das Reibmoment.

Besonders bevorzugt ist es, wenn die Ausgleichseinrichtung derart ausgebildet ist, dass die von ihr ausgeübte Gegenkraft unabhängig von der Temperatur ist. Hierdurch kann gewährleistet werden, dass das Verhältnis der beiden entgegengesetzt gerichteten Drehmomente in dem gesamten Betriebstemperaturbereich der Ausgleichseinrichtung konstant ist.

Nach einer Ausgestaltung der Erfindung ist die Ausgleichseinrichtung derart angeordnet und/oder orientiert, dass die Drehposition der Verschließeinrichtung, in welcher das erste Drehmoment einen Maximalwert annimmt, im Wesentlichen der Drehposition der Verschließeinrichtung entspricht, in welcher das zweite Drehmoment einen Maximalwert annimmt. Hierdurch kann bei passender Anlenkung und Orientierung der Ausgleichseinrichtung bezüglich der Verschließeinrichtung gewährleistet werden, dass das Verhältnis der beiden entgegengesetzt gerichteten Drehmomente in allen Drehpositionen der Verschließeinrichtung, die innerhalb des Schwenkbereichs oder des Teilbereichs hiervon liegen, im Wesentlichen konstant ist.

Nach einer anderen Ausgestaltung der Erfindung ist das Reibmoment in allen Drehpositionen der Verschließeinrichtung, die innerhalb des Schwenkbereichs oder des Teilbereichs hiervon liegen, gleich groß. Das Reibmoment ist in dem Schwenkbereich oder dem Teilbereich hiervon dabei größer als der Betrag der maximalen Differenz aus dem ersten Drehmoment und dem zweiten Drehmoment.

Nach einer weiteren Ausgestaltung der Erfindung umfassen die Reibmittel eine Bremse. Hierdurch kann ein vorgegebenes Reibmoment exakt und zuverlässig erzeugt werden. Bei der Bremse kann es sich beispielsweise um eine Magnetbremse handeln, welche bevorzugt wartungsfrei betreibbar ist.

Die Reibmittel können beispielsweise mit einem Teil starr mit einer Wand, insbesondere eines Kraftfahrzeugs, und mit einem anderen Teil starr mit der Achse oder einer Welle des Antriebs verbunden sein, wobei das Reibmoment zwischen den beiden Teilen erzeugbar ist.

Nach einer weiteren Ausgestaltung der Erfindung ist an der einen Seite der Verschließeinrichtung die Ausgleichseinrichtung, insbesondere eine Gasdruckfeder, und an der anderen Seite der Verschließeinrichtung der Antrieb vorgesehen ist. Insbesondere in diesem Fall kann der Antrieb als Linearantrieb ausgebildet sein, wobei der Linearantrieb mit einer der Ausgleichseinrichtung ähnlichen Gestalt ausgebildet sein kann.

Weitere vorteilhafte Ausführungsformen der Erfindung sind in den Unteransprüchen, der Beschreibung sowie der Zeichnung angegeben.

Nicht beschränkende Ausführungsbeispiele der Erfindung sind in der Zeichnung dargestellt und werden nachfolgend beschrieben.

Es zeigen, jeweils in schematischer Darstellung,

Fig. 1    Seitenansichten einer Heckklappe eines Kraftfahrzeugs gemäß einem ersten Ausführungsbeispiel der Anordnung, in einer geöffneten und einer geschlossenen Drehposition, und

Fig. 2    eine Seitenansicht einer Hecklappe eines Kraftfahrzeugs gemäß einem zweiten Ausführungsbeispiel der Anordnung, in einer geöffneten und einer geschlossenen Drehposition.

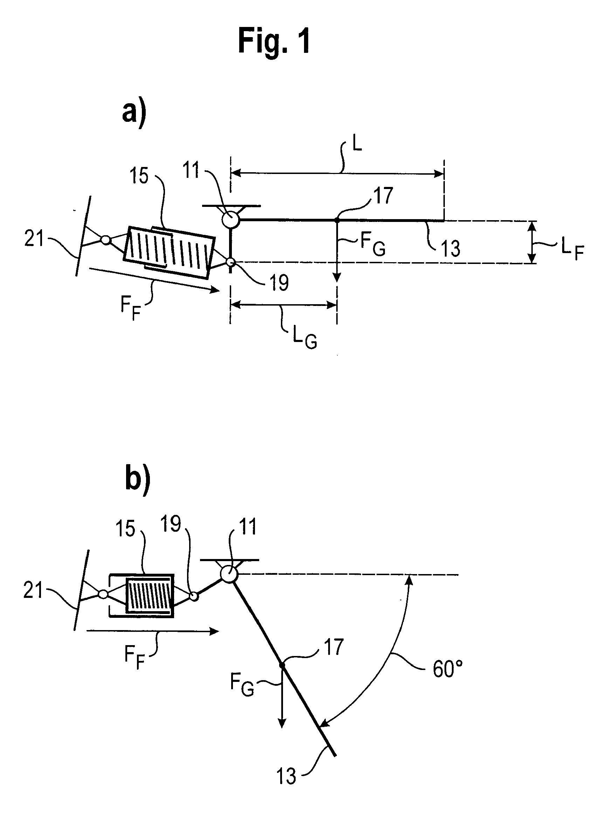

Die in Fig. 1 dargestellte Heckklappe 13 ist um eine Achse 11 schwenkbar, um das Heck eines Kraftfahrzeugs zu schließen oder zu öffnen. Die Heckklappe 13 ist hierzu mit einem nicht dargestellten motorgetriebenen Antrieb gekoppelt, welcher bidirektional betreibbar ist und einen Elektromotor umfasst, um die Heckklappe 13 sowohl im Uhrzeigersinn in die in Fig. 1b dargestellte geschlossene Drehposition als auch gegen den Uhrzeigersinn in die in Fig. 1a dargestellte geöffnete Drehposition zu schwenken. Der Antrieb ist dabei rücktreibbar ausgebildet, um trotz des Antriebs eine manuelle Betätigung der Heckklappe 13 zu ermöglichen.

Darüber hinaus ist an zumindest einer Seite der Heckklappe 13 eine vorgespannte Gasdruckfeder 15 vorgesehen. Die Gasdruckfeder 15 ist einerseits an eine Wand 21 des Kraftfahrzeugs und andererseits an die Heckklappe 13 angelenkt. Die Anlenkung an die Heckklappe 13 erfolgt an einer dem Schwerpunkt 17 der Heckklappe 15 bezüglich der Achse 11 gegenüberliegenden Anlenkstelle 19 der Heckklappe 13, wobei die Anlenkstelle 19 näher an der Achse 11 liegt als der Schwerpunkt 17 der Heckklappe 13. Der die Anlenkstelle 19 aufweisende Teil der Heckklappe 13 ist dabei rechtwinklig zu dem den Schwerpunkt 17 aufweisenden Teil der Heckklappe 13 angeordnet.

Die Anordnung ist derart gewählt, dass in der geöffneten Drehposition gemäß Fig. 1a die Gewichtskraft $F_G$ der Heckklappe 13, wobei die Heckklappe 13 in der geöffneten Drehposition waagrecht angeordnet ist, und die von der Gasdruckfeder 15 ausgeübte Federkraft $F_F$ jeweils im Wesentlichen senkrecht auf ihrem jeweiligen Kraft- oder Hebelarm bezüglich der Achse 11 stehen.

In der geöffneten Drehposition gemäß Fig. 1a wird durch die Gewichtskraft $F_G$ der Heckklappe 13, deren Schwerpunkt 17 sich in einer Entfernung $L_G$ von der Achse 11 befindet, ein erstes Drehmoment $M_G$ erzeugt, um die Heckklappe 13 im Uhrzeigersinn zu drehen, wobei

$$(1) \qquad M_G = F_G \cdot L_G.$$

Durch die Gasdruckfeder 15, die eine Federkraft $F_F$ ausübt und deren Anlenkstelle 19 sich in einer Entfernung $L_F$ von der Achse 11 befindet, wird in der geöffneten Drehposition gemäß Fig. 1a ein zweites Drehmoment $M_F$ erzeugt, um die Heckklappe 13 gegen den Uhrzeigersinn zu drehen, wobei zumindest im Wesentlichen

$$(2) \qquad M_F = F_F \cdot L_F.$$

Das durch die Gewichtskraft $F_G$ erzeugte Drehmoment $M_G$ und das durch die Federkraft $F_F$ erzeugte Drehmoment $M_F$ nehmen in der in Fig. 1a dargestellten geöffneten Drehposition der Heckklappe 13 oder zumindest in Nähe dieser Drehposition jeweils einen Maximalwert innerhalb des Schwenkbereichs der Heckklappe 13 an.

Die Federkraft $F_F$ der Gasdruckfeder 15 wirkt dabei der Gewichtskraft $F_G$ der Heckklappe 13 entgegen, so dass die Heckklappe 13 einem resultierenden Drehmoment, welches der Differenz der beiden Drehmomente $M_G$ und $M_F$ entspricht, unterworfen ist.

Wird die Gasdruckfeder 15 aus der geöffneten Drehposition in die in Fig. 1b dargestellte geschlossene Drehposition überführt, nehmen die zu den Drehmomenten $M_G$ und $M_F$ beitragenden Anteile der Gewichtskraft $F_G$ und der Federkraft $F_F$ und damit die Drehmomente $M_G$ und $M_F$ - abgesehen von dem in nächster Nähe zur geöffneten Drehposition befindlichen Bereich - im Wesentlichen im gleichen Verhältnis kontinuierlich ab. Insbesondere ist das Verhältnis der beiden Drehmomente $M_G$ und $M_F$ in allen Drehpositionen der Heckklappe 13 innerhalb des Schwenkbereichs zwischen der geöffneten Drehposition und der geschlossenen Drehposition im Wesentlichen konstant.

In der geschlossenen Drehposition gemäß Fig. 1b, in welcher die Heckklappe um 60° gegenüber der geöffneten Drehposition gedreht ist, wird durch die Gewichtskraft $F_G$ der Heckklappe 13 nun ein erstes Drehmoment $M_G$ erzeugt, wobei

$$(3) \qquad M_G = \tfrac{1}{2} \cdot F_G \cdot L_G.$$

Durch die Gasdruckfeder 15, die die Federkraft $F_F$ ausübt, wird in der geschlossenen Drehposition gemäß Fig. 1b ein zweites Drehmoment $M_F$ erzeugt, wobei zumindest im Wesentlichen

$$(4) \qquad M_F = \tfrac{1}{2} \cdot F_F \cdot L_F.$$

Die Anordnung umfasst weiterhin eine nicht dargestellte wartungsfreie Magnetbremse, welche mit einem Teil starr mit einer Fahrzeugwand und mit einem anderen Teil starr mit der Achse 11 oder einer Welle des Antriebs verbunden ist, wobei einer der beiden Teile um den anderen der beiden Teile drehbar ist, wobei zwischen den beiden Teilen bei Drehung ein konstantes Reibmoment $M_R$ erzeugt wird, welches über den gesamten Betriebstemperaturbereich der Anordnung und über den gesamten Schwenkbereich der Heckklappe 13 hinweg gleich groß ist und dem resultierenden Drehmoment entgegenwirkt. Dies gilt sowohl bei manueller als auch bei antriebsseitiger Betätigung der Heckklappe 13.

Das Reibmoment $M_R$ ist dabei derart gewählt und/oder eingestellt, dass es in jeder Drehposition des Schwenkbereichs der Heckklappe 13 größer ist als der Betrag der Differenz aus dem durch die Gewichtskraft $F_G$ erzeugten ersten Drehmoment $M_G$ und dem durch die Federkraft $F_F$ der Gasdruckfeder 15 erzeugten zweiten Drehmoment $M_F$, so dass die Heckklappe 15 bei abgeschaltetem Antrieb in jeder Zwischenposition festgehalten werden kann:

$$(5) \qquad M_R > \left| M_G - M_F \right|.$$

Damit die Heckklappe 15 innerhalb des gesamten Schwenkbereichs festgehalten werden kann, ist es erforderlich, dass das Reibmoment $M_R$ größer ist als der im Schwenkbereich maximal auftretende Betrag der Differenz aus dem ersten Drehmoment $M_G$ und dem zweiten Drehmoment $M_F$.

Um die Heckklappe 13 durch den Antrieb zu betätigen, muss der Antrieb in jeder Drehposition des Schwenkbereichs der Heckklappe 13 das folgende Drehmoment M aufbringen:

Beim Öffnen:

$$(6) \qquad M > M_G - M_F + M_R.$$

Beim Schließen:

$$(7) \qquad M > M_F - M_G + M_R.$$

Um die Heckklappe 13 manuell zu betätigen, muss der Benutzer in jeder Drehposition des Schwenkbereichs der Heckklappe 13 das folgende Drehmoment M aufbringen:

Beim Öffnen:

$$(8) \qquad M > M_G - M_F + M_R + M_A,$$

wobei $M_A$ dem für das Rücktreiben des Antriebs aufzuwendenden Drehmoment entspricht.

Beim Schließen:

$$(9) \qquad M > M_F - M_G + M_R + M_A.$$

Bevorzugt werden die Gewichtskraft $F_G$, die Federkraft $F_F$, die Entfernung $L_G$ und die Entfernung $L_F$ derart gewählt, dass die entgegengesetzt wirkenden Drehmomente $M_G$ und $M_F$ zumindest in einer Drehposition des Schwenkbereichs der Heckklappe 13 im Wesentlichen gleich groß sind:

$$(10) \qquad M_G = M_F.$$

Aufgrund der in Fig. 1 gewählten Anordnung und Orientierung der Gasdruckfeder 15 bezüglich der Heckklappe 13 wird erreicht, dass die beiden entgegengesetzt wirkenden Drehmomente $M_G$ und $M_F$ auch in den anderen Drehpositionen des Schwenkbereichs im Wesentlichen gleich groß sind.

Hierdurch wird gewährleistet, dass das von dem Antrieb oder von einem Benutzer aufzubringende Drehmoment, um die Heckklappe 13 zu öffnen oder zu schließen, für beide Drehrichtungen möglichst gering ist.

Üblicherweise wird der Betrag der Differenz aus dem ersten Drehmoment $M_G$ und dem zweiten Drehmoment $M_F$ über die verschiedenen Drehpositionen der Heckklappe 13 hinweg nicht konstant 0 betragen, sondern innerhalb gewisser Grenzen und/oder geringfügig variieren.

Um im Wesentlichen gleich große Drehmomente $M_G$ und $M_F$ bei allen Betriebstemperaturen der Anordnung zu gewährleisten, wird bevorzugt eine temperaturkompensierende Gasdruckfeder 15 eingesetzt, d.h. eine Gasdruckfeder 15, bei welcher die ausgeübte Federkraft $F_F$ weitestgehend unabhängig von der Temperatur ist.

Bei Gasdruckfedern 15, deren Federkraft $F_F$ mit der Temperatur variiert, kann die Federkraft $F_F$ derart gewählt werden, dass zumindest in einem mittleren Betriebstemperaturbereich der Gasdruckfeder 15 die entgegengesetzt gerichteten Drehmomente $M_G$ und $M_F$ im Wesentlichen gleich groß sind. Bei einer niedrigeren Temperatur ist die Federkraft $F_F$ dann entsprechend kleiner, so dass auch das von der Federkraft $F_F$ erzeugte Drehmoment $M_F$ kleiner ist als das von der Gewichtskraft $F_G$ erzeugte Drehmoment $M_G$. Bei einer höheren Temperatur ist die Federkraft $F_F$ dann entsprechend größer, so dass auch das von der Federkraft $F_F$ erzeugte Drehmoment $M_F$ größer ist als das von der Gewichtskraft $F_G$ erzeugte Drehmoment $M_G$.

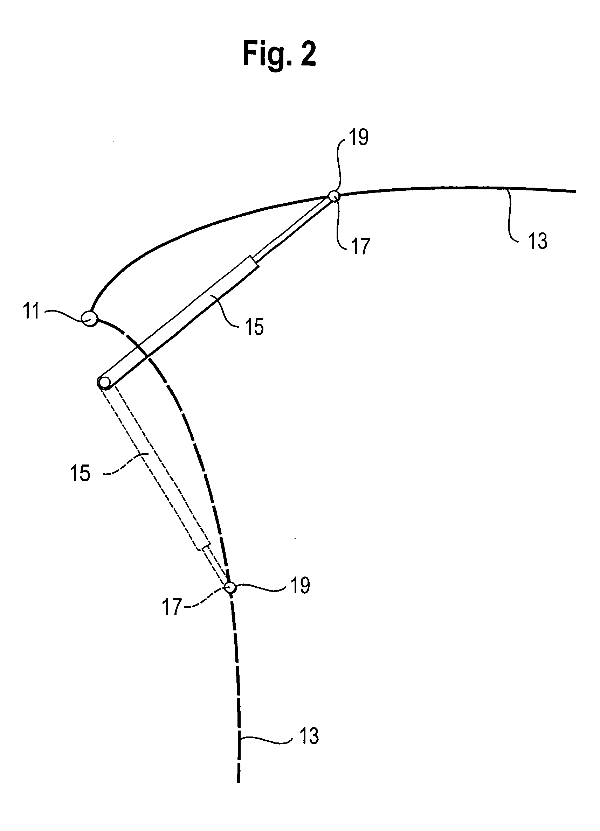

Die Gasdruckfeder 15 kann jedoch auch in einer anderen als in Fig. 1 gezeigten Weise zu der Heckklappe 13 orientiert und/oder an der Heckklappe 13 angelenkt sein. Beispielsweise ist auch eine Anordnung denkbar, bei der die Gasdruckfeder 15 an einer seitlichen Anlenkstelle 19 in Höhe des Schwerpunkts 17 der Verschließeinrichtung 13 an die Heckklappe 13 angelenkt ist, wie in Fig. 2 gezeigt ist, wobei die Anordnung in der geöffneten Drehposition mit durchgezogenen Linien und in der geschlossenen Drehposition gestrichelt dargestellt ist. Der bezüglich der Heckklappe 13 mittige Schwerpunkt 17 und die bezüglich der Heckklappe 13 seitliche Anlenkstelle 19 fallen dabei lediglich in der Seitenansicht von Fig. 2 zusammen. Ansonsten sind die vorstehend zu Fig. 1 gemachten Erläuterungen aber im Wesentlichen analog auf die Anordnung gemäß Fig. 2 übertragbar.

Insgesamt ergibt sich mit der erfindungsgemäßen Anordnung eine Möglichkeit, ein Festhalten einer Verschließeinrichtung in einer beliebigen Zwischenposition zu gewährleisten, aus welcher kupplungsfrei eine manuelle Betätigung der Verschließeinrichtung möglich ist.

Bezugszeichenliste

| | |
|---|---|
| 11 | Achse |
| 13 | Heckklappe |
| 15 | Gasdruckfeder |
| 17 | Schwerpunkt |
| 19 | Anlenkstelle |
| 21 | Wand |

**Patentansprüche**

1. Anordnung, insbesondere für ein Kraftfahrzeug, mit

   einer zwischen einer geschlossenen und einer geöffneten Stellung um eine Achse (11) schwenkbaren Verschließeinrichtung (13), beispielsweise einem Kofferraumdeckel oder einer Heckklappe,
   einer auf die Verschließeinrichtung (13) wirkenden Ausgleichseinrichtung (15), insbesondere wenigstens einer Gasdruckfeder, welche vorgespannt ist und der Gewichtskraft ($F_G$) der Verschließeinrichtung (13) eine Gegenkraft ($F_F$) entgegensetzt, und

einem motorgetriebenen, zumindest unidirektional, insbesondere bidirektional betreibbaren Antrieb, um die Verschließeinrichtung (13) in wenigstens einer Richtung um die Achse (11) zu schwenken, wobei der motorgetriebene Antrieb rücktreibbar ausgebildet ist, um eine manuelle Betätigung der Verschließeinrichtung (13) zu ermöglichen,

**dadurch gekennzeichnet,**

**dass** Reibmittel vorgesehen sind, die sowohl bei manueller Betätigung der Verschließeinrichtung (13) als auch bei Betätigung durch den Antrieb mit einem vorgegebenen Reibmoment auf die Verschließeinrichtung (13) wirken, wobei das Reibmoment innerhalb des Schwenkbereichs der Verschließeinrichtung (13) oder eines Teilbereichs hiervon größer ist als der Betrag der Differenz aus einem durch die Gewichtskraft ($F_G$) der Verschließeinrichtung (13) erzeugten ersten Drehmoment ($M_G$) und einem durch die Gegenkraft ($F_F$) der Ausgleichseinrichtung erzeugten zweiten Drehmoment ($M_F$).

2. Anordnung nach Anspruch 1,
   **dadurch gekennzeichnet,**
   **dass** zumindest bei einer mittleren Betriebstemperatur der Ausgleichseinrichtung (15) die entgegengesetzt gerichteten Drehmomente ($M_G$, $M_F$) im Wesentlichen gleich groß sind.

3. Anordnung nach Anspruch 1 oder 2,
   **dadurch gekennzeichnet,**
   **dass** die Ausgleichseinrichtung (15) derart ausgebildet ist, dass die von ihr ausgeübte Gegenkraft ($F_F$) unabhängig von der Temperatur ist.

4. Anordnung nach einem der vorstehenden Ansprüche,
   **dadurch gekennzeichnet,**
   **dass** die Ausgleichseinrichtung (15) derart angeordnet und/oder orientiert ist, dass die Drehposition der Verschließeinrichtung (13), in welcher das erste Drehmoment ($M_G$) einen Maximalwert annimmt, im Wesentlichen der Drehposition der Verschließeinrichtung (13) entspricht, in welcher das zweite Drehmoment ($M_F$) einen Maximalwert annimmt.

5. Anordnung nach einem der vorstehenden Ansprüche,
   **dadurch gekennzeichnet,**
   **dass** das Reibmoment in allen Drehpositionen der Verschließeinrichtung (13), die innerhalb des Schwenkbereichs oder des Teilbereichs hiervon liegen, gleich groß ist.

6. Anordnung nach einem der vorstehenden Ansprüche,
   **dadurch gekennzeichnet,**
   **dass** die Reibmittel eine Bremse, insbesondere eine Magnetbremse, umfassen.

7. Anordnung nach einem der vorstehenden Ansprüche,
   **dadurch gekennzeichnet,**
   **dass** die Reibmittel mit einem Teil starr mit einer Wand, insbesondere eines Kraftfahrzeugs, und mit einem anderen Teil starr mit der Achse (11) oder einer Welle des Antriebs verbunden ist, wobei das Reibmoment zwischen den beiden Teilen erzeugbar ist.

8. Anordnung nach einem der vorstehenden Ansprüche,
   **dadurch gekennzeichnet,**
   **dass** an der einen Seite der Verschließeinrichtung (13) die Ausgleichseinrichtung (15), insbesondere eine Gasdruckfeder, und an der anderen Seite der Verschließeinrichtung (13) der Antrieb vorgesehen ist.

# Fig. 1

## a)

## b)

# Fig. 2